# EUROPEAN PATENT SPECIFICATION

(11) **EP 1 864 854 B1**
(45) Date of publication and mention of the grant of the patent: **22.05.2013**
(21) Application number: 07109666.3
(22) Date of filing: 05.06.2007
(51) Int. Cl.: B60N 2/50, B60N 2/52

(54) **Suspension system having active compensation for vibration**
Aufhängungssystem mit aktiver Vibrationskompensation
Système de suspension ayant une compensation active des vibrations

(30) Priority: 06.06.2006 US 811335 P; 10.08.2006 US 503015; 10.08.2006 US 502185
(43) Date of publication of application: 12.12.2007
(73) Proprietor: Deere & Company, Moline, IL 61265-8098 (US)
(72) Inventor: Shoemaker, Jim M., Horicon, IL 53032 (US); Stahlhut, Ronnie D., Bettendorf, IA 52722 (US); Schick, Troy E., Cedar Falls, IA 50613 (US); Romig, Bernard E., Illinois City, IL 61259 (US)
(74) Representative: Magin, Ludwig Bernhard

(56) References cited:
- EP-A- 1 577 156
- EP-A- 1 652 724
- WO-A-2004/101311
- DE-A1- 2 736 242

## Description

This invention relates to a suspension system for a seat having active compensation for vibration.

Suspension systems for seats may use hydraulic damping to reduce the vibration of a seat of a vehicle. Both WO 2004/101311 A , which discloses furthermore all the technical features of the preamble of claim 1, and EP 1 652 724 A disclose active suspension systems for driver seats. However, the operator of the vehicle may be subjected to vibrations at higher frequencies than the response rate of the hydraulic damping. For example, if vehicle is operated at sufficiently high speeds, the hydraulic damping may fail to attenuate the vibrations from traveling over the ground; hence, the operator may experience a bumpy and jarring ride. Thus, there is a need to provide active compensation for vibration.

A suspension system for a seat of a vehicle comprises a base, a linkage, and a seat attached to the base via the linkage. A pneumatic shock absorber provides a respective resistance level against movement of the seat with respect to the base based on a corresponding pressure level of air or gas within the pneumatic shock absorber. A set of cylindrical members (e.g., gears) are spaced apart beneath the seat and/or are located close to the seat. A tension member is arranged to engage the cylindrical members. The tension member is attached (or operably coupled) to the seat via a bracket. An electric motor is capable of driving at least one of the cylindrical members. A first sensor is arranged to detect first sensor data associated with an instantaneous position of the seat versus time. A controller generates at least one of a first control signal for the electric motor to change a height of the seat in opposition to a change in the instantaneous position of the seat and a second control signal to change the pressure level.

For a complete understanding of the objects, techniques, and structure of the invention reference should be made to the following detailed description and accompanying drawings, wherein:

FIG. 1 is a first embodiment of a suspension system for a seat of a vehicle.

FIG. 2 is a second embodiment of a suspension system for a seat of a vehicle.

FIG. 3 shows the active compensation portion of the suspension system of FIG. 2.

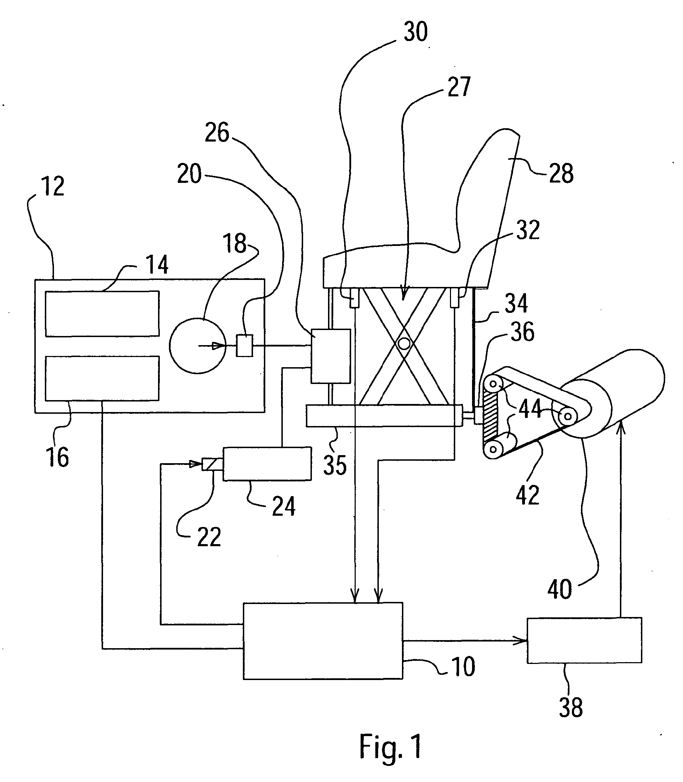

FIG. 1 illustrates one embodiment of a suspension system for a seat 28 of a vehicle. The suspension system comprises a base 35, a linkage 27, and a seat 28 attached to the base 35 via the linkage 27. In one embodiment, the linkage 27 may comprise a scissors support system, although any suitable support system may be used that allows vertical adjustment of the seat 28. A pneumatic shock absorber 26 provides a respective resistance level against movement of the seat 28 with respect to the base 35 based on a corresponding pressure level of air or gas within the pneumatic shock absorber 26. A set of cylindrical members 44 (e.g., gears, pulleys, sprockets, spools or cog wheels) are spaced apart beneath the seat 28. A tension member 42 is arranged to engage the cylindrical members 44. The tension member 42 is operably coupled to the seat 28 via a retainer 36 and bracket 34. An electric motor 40 is capable of driving one of the cylindrical members 44. A first sensor 32 is arranged to detect first sensor data associated with an instantaneous position of the seat 28 versus time or the vehicle. A second sensor 30 provides second sensor data associated with an instantaneous velocity or instantaneous acceleration of the seat 28. A controller 10 generates at least one of a first control signal and a second control signal. The controller 10 may transmit the first control signal to the electric motor 40 or the motor driver 38 to provide a change height of the seat 28 in opposition to a change in the instantaneous position of the seat 28. The controller 10 may transmit the second control signal to the compressor assembly 12 or the pressure regulator 20 to change the pressure level. For example, controller 10 instructs the motor 40 or motor driver 38 to change the position of the seat in accordance with a compensation movement (e.g., vertical height movement) with a compensation frequency or frequencies that approximate a detected vibrational frequency or frequencies detected by the sensors 30, 32, where the compensation movement has a generally opposite phase to the phase of the detected vibrational frequency or frequencies.

A compressor assembly 12 provides compressed air or gas to pressurize an interior chamber of the pneumatic shock absorber 26 to a desired pressure level. The compressor assembly 12 comprises a control 20. The control interface 16 supports communication with the controller 10 and may convert control data to a control signal suitable for controlling at least one of a compressor motor 14 and a pressure regulator 20. For example, the control interface 16 may comprise a switch for enabling or disabling the compressor motor 14, or for adjusting a gas pressure or air pressure of an outlet associated with the pressure regulator 20. The control interface 16 is electrically or electromagnetically coupled to the compressor motor 14. A compressor output port of the compressor 18 may be coupled to a pressure regulator 20, or the combination of a tank and a pressure regulator 20. The pressure regulator 20 may be associated with a solenoid, a servo-motor, an electro-mechanical device, an electro-hydraulic device, or another control device for controlling a setting or valve opening of the pressure regulator 20. The controller 10 may provide a control signal to the control device of the pressure regulator 20 to adjust an output pressure of gas or air, or the pressure regulator may supply compressed gas or air at a fixed pressure level. A regulator outlet of the pressure regulator 20 or the compressor assembly 12 is coupled to the pneumatic shock absorber 26 via tubing, flexible tubing, a hose, or another conduit for pressurized air or gas. During operation, the pressure level at the regulator outlet is generally greater than or equal to the pressure level within an internal chamber of the pneumatic shock absorber 26.

The pneumatic shock absorber 26 may comprise an airbag, a pneumatic air spring, or another damping mechanism that uses compressed air or gas. An internal chamber of the pneumatic shock absorber 26 is configured to contain pressured air or gas. An inlet to the internal chamber may be fed by an output of the compressor assembly 12 or the regulator outlet. An outlet to the internal chamber may be associated with a vent 24. In one embodiment, the vent 24 comprises an electro-hydraulic valve, a servo-motor controlled valve, or a solenoid controlled valve for venting air or gas from the internal chamber to relieve or reduce the pressure level of the air or gas within the internal chamber (of the pneumatic shock absorber 26). Similarly, the vent 24 may comprise the combination of a valve and an electro-mechanical device, a servo-motor, a solenoid, or another device 22 for regulating the valve, the extent of a valve opening, or its opening or closure.

In an alternate embodiment, the combination of the compressor assembly 12, the pneumatic shock absorber 26, and the vent 24 may be replaced by a charged pneumatic shock absorber. A charged pneumatic shock absorber is filled with compressed gas or air at a desired degree of pressure. For example, the charged pneumatic shock absorber may be filled with compressed air or gas to a desired pressure level at a factory or during the manufacture of the charged pneumatic shock absorber. Some configurations of the charged pneumatic shock absorber may be sealed to as not to allow further pressurization or re-pressurization of the internal chamber. Accordingly, if the charged pneumatic shock absorber is used, there is no need for the controller to generate a second control signal for changing its pressure level.

A first sensor 32 may comprise a position sensor that is capable of outputting position data, or position data versus time data. The first sensor 32 may comprise a transducer (e.g., Hall effect transducer), a magneto resistive sensor, a magnetic field sensor, a laser transceiver, an optical sensor, or another device for determining the relative position of the seat 28 (or a member attached thereto) to a fixed reference (e.g., the base 35 or a floor of the vehicle). If a magneto resistive sensor or magnetic field sensor is used, a magnet or magnet assembly is spaced apart from the sensor such that the sensor may detect changes in the magnetic field (e.g., intensity or magnitude) that correspond to changes in movement of the seat 28. The first sensor 32 is secured to the seat 28 or a portion that moves with the seat 28, and the magnet or magnet assembly is secured to a stationary portion or base that does not move with the seat 28, or vice versa. Stationary mounts may extend from the base 35 for supporting the magnet or magnet assembly, for example. The first sensor 32 or the controller 10 may be associated with a clock or timer to provide temporal data that corresponds to respective detected position data. An output of the first sensor 32 is coupled to an input of the controller 10 to provide first sensor data or a first sensor signal to the controller 10.

In an alternative embodiment, the first sensor 32 may be realized by the combination of an accelerometer and an integrator. Alternatively, the controller 10 may comprise a data processing module or integrator module for determining an instantaneous position of the seat from instantaneous vertical acceleration. Although the first sensor 32 is secured to a bottom of the seat 28 as shown, in an alternative embodiment the first sensor 32 may be attached to another portion of the seat 28, the linkage 27, or a stationary mount extending from the base 35. If the first sensor 32 is mounted on a stationary mount extending from the base 35, a magnet or magnet assembly may be mounted in proximity on or in the seat 28 or on the linkage 27.

The second sensor 30 may comprise an accelerometer. For example, an accelerometer may comprise a micro-electromechanical device with a member that moves in response to motion of the device and produces a change in resistance, capacitance, inductance, voltage or current indicative of the acceleration of the device. The accelerometer is associated with circuitry for detecting a change in resistance, capacitance, inductance, voltage or current in accordance with the design parameters of the accelerometer. An acceleration output of the accelerometer may be coupled to an input of one or more integrators to determine a velocity or a position associated with the acceleration output. An output of the second sensor 30 is coupled to an input of the controller 10 to provide second sensor data or a second sensor signal to the controller 10.

Although the accelerometer is secured directly or indirectly (e.g., to a bottom of the seat 28) as shown in FIG. 1, in an alternate embodiment the second sensor 30 may be secured to a base or another portion of the vehicle such that the second sensor 30 measures the vertical acceleration (e.g. instantaneous vertical acceleration) of the vehicle, rather than that of the seat 28. Because the seat 28 may react, move or accelerate with a lag time to the vertical acceleration of the vehicle, the response time of the active compensation of the motor 40 and tension member 42 may be reduced by using acceleration measurements associated with the vehicle or the base, as opposed to the seat 28.

In one configuration, the second sensor 30 may be used to establish the amplitude (or maximum compensating displacement) of the active damping response of the motor 40. For example, the second sensor 30 may detect a peak vertical position and a lowest vertical position (or positional amplitude versus time) of the seat as those positions of substantially no vertical acceleration or a vertical acceleration approaching zero for the seat 28.

A controller 10 controls the damping response or resistance level to motion of the pneumatic member based on one or more of the following: first sensor data of the first sensor 32, a first sensor signal of the first sensor 32, second sensor data of the second sensor 30, and a second sensor signal of the second sensor 30. In one embodiment, the controller 10 may change the passive damping response of the pneumatic shock absorber 26 by adjusting the pressure level within its internal chamber. For example, the controller 10 may change the passive damping response of the pneumatic shock absorber 26 by using the compressor assembly 12 to increase the pressure level within the internal chamber or by using the vent 24 to reduce the pressure level within the internal chamber. For example, the controller 10 may change the passive damping response of the pneumatic shock absorber 26 by adjusting a pressure level of the pressure regulator 20. Such an increase or reduction in the pressure level may be carried out to provide a desired degree of passive damping of vibration of the seat 28.

The motor 40 may comprise a stepper motor, a rotary motor, a direct current (DC) motor 40, or an alternating current (AC) motor.

A stepper motor is generally designed to step to a limited number of discrete rotational positions or incremental angular steps based on one or more control signals from the motor driver 38. Accordingly, a stepper motor may provide highly accurate changes in the position in the seat 28 to actively compensate for vibration of the seat 28 or vehicle. A stepper motor may comprise an internal rotor with permanent magnets or a ferrous core with poles controlled by a set of external magnets that are switched electronically. The rotor of a stepper motor may turn forwards or backwards based on the sequence in which windings of the motor are energized or de-energized.

The motor driver 38 may facilitate control of the motor 40 to change or reverse the rotational direction of the motor 40 and to change the speed of the motor 40. If the motor 40 is a stepper motor, the motor driver 38 may be configured as a stepper motor driver. A stepper motor driver may selectively energize one or more windings to direct the motor 40 to one or more desired positions versus time. The windings may be energized completely (e.g., to achieve saturation of the magnetic field) or may be energized partially to achieve the desired position or rotational direction.

If the motor 40 is a DC motor, the motor driver 38 may reverse the rotational direction of the motor 40 by changing the polarity of the electrical energy (e.g., voltage) applied to the motor 40 or the windings; the motor driver 38 may vary the speed of the motor 40 by varying the voltage level applied to the motor 40. The speed of a DC motor is generally proportional to the voltage applied to the DC motor. The motor driver 38 may comprise a resistive network or variable voltage output device for a DC motor. If the motor 40 is an AC motor, the motor driver 38 may apply an alternating current signal or pulse width modulated signal, for example. The rotational speed of an AC motor is generally proportional to the frequency (or pulse frequency and width) of the control signal output by the motor driver 38.

As shown in FIG. 1, the motor 40 is associated with a set of three cylindrical members 44 (e.g., gears, sprockets, pulleys, or cogged wheels). The cylindrical members 44 may be supported by support members that extend from the base, for instance. In one embodiment, the tension member 42 may engage the cylindrical members 44, such that the tension member 42 has a generally triangular profile. The tension member 42 may comprise a chain, a belt, a cog timing belt, a cable, a belt with teeth, a serrated belt, a belt with cogs, or the like. A retainer 36 is attached to (e.g., may interlock with) a generally vertical portion of the tension member 42. In turn, the retainer 36 is secured to a bracket 34 connected to the seat 28. Accordingly, the movement of the motor 40 may cause the retainer 36 and hence, the seat 28 to move upward or downward by a desired amount and at a desired time to actively dampen vibrations of the seat 28. The motor 40 may be rotated in one rotational direction for upward movement of the seat 28 and in the opposite rotational direction for downward movement of the seat 28.

The controller 10 sends a control signal (e.g., a first control signal or second control signal) or control data to the motor driver 38 based on at least one or more of the following input data: first sensor data, a first sensor signal, second sensor data, and a second sensor signal. The controller 10 generates a control signal to dampen or reduce the vibrations of the seat 28 at one or more detected frequencies by the sensors 30, 32. Further, the motor driver 38 and motor 40 can move the seat 28 to respond to detected frequencies of vibration less than, equal to, or greater than 2 Hertz. In contrast, hydraulic damping may be limited to vibrational frequencies of less than 2 Hertz. The controller 10 cooperates with the motor driver 38 to produce movement of the seat 28 that is generally out of phase (e.g., approximately 180 degrees of phase offset at a given corresponding vibrational frequency) with the vibrational frequency or frequencies detected via the first sensor 32 and the second sensor 30.

The motor 40 is capable of providing active damping in response to vibrations transmitted from the vehicle traversing the ground and wherein the pneumatic shock absorber 26 is capable of providing passive damping in response to the vibrations. In one embodiment, the level of passive damping of the pneumatic shock absorber 26 is proportional to a weight of an operator who occupies the seat 28 based on sensor data from the first sensor 32, the second sensor 30, or both, when the vehicle is stationary or when a speedometer falls below a minimum value. Accordingly, the level of passive damping may be kept uniform (e.g., for an entire operator session), unless there is a change in operator, whereas the controller 10 may control the active damping of the motor 40 to compensate for vibrations associated with the terrain. In one example, during or after starting of a vehicle, as a weight of an operator detected by one or more sensors 30, 32 increases with a respect to a reference operator weight, the controller 10 increases proportionally the level of passive damping or increases the pressure level of air or gas within the pneumatic shock absorber 26 (e.g., the output of the pressure regulator 20). In another example, during or after starting of a vehicle, as a weight of an operator detected by one or more sensors 30, 32 decreases with respect to a reference operator weight, the controller 10 decreases proportionally the level of the passive damping or reduces the pressure level of air or gas within the pneumatic shock absorber 26 (e.g., the output of the pressure regulator 20). The reference operator weight may be inputted by a user via the controller 10 or programmed into the controller 10 as a default or factory setting (e.g., average male weight in country of use), for example.

In one embodiment, the controller 10 maintains a sum of the active damping (e.g., opposing movement in response to vibrational movement of the seat 28) and passive damping (e.g., resistance to vertical vibrational movement of the seat 28) that is generally constant over a time interval (e.g., a lead time interval) to adjust the proportion or ratio of active damping to passive damping. Accordingly, as controller 10 increases passive damping by increasing the pressure level of the internal chamber of the pneumatic shock absorber 26 during the time interval, the controller 10 reduces active damping by decreasing the amplitude of position changes of the motor 40 during the time interval (e.g., lead time interval) to maintain a generally constant overall damping response during the time interval. Conversely, as the controller 10 increases active damping by increasing the amplitude of position changes of the motor 40 during the time interval (e.g., lead time interval), the controller 10 reduces the passive damping by reducing the pressure level within the internal chamber of the pneumatic shock absorber 26 to maintain a generally constant overall damping response during an interval. The duration of the time interval (e.g., lead time interval) may depend upon whether the vibration of the seat 28 is continuous, whether the vibration of the seat 28 is intermittent, and the rate of decay of vibrational energy, for example. Further, during subsequent time intervals, following a time interval (e.g., lead time interval) with a generally constant overall damping response, the controller 10 may gradually decrease the passive damping, the active damping or both commensurate with (e.g., proportional to) the detected positional amplitude of vibrations and any decay of the amplitude over time.

In an alternate embodiment, the motor 40 may comprise a linear motor that is directly coupled to the retainer 36 or bracket 34, without any need for the tension member 42 and the cylindrical members 44, which may be deleted from the alternate embodiment.

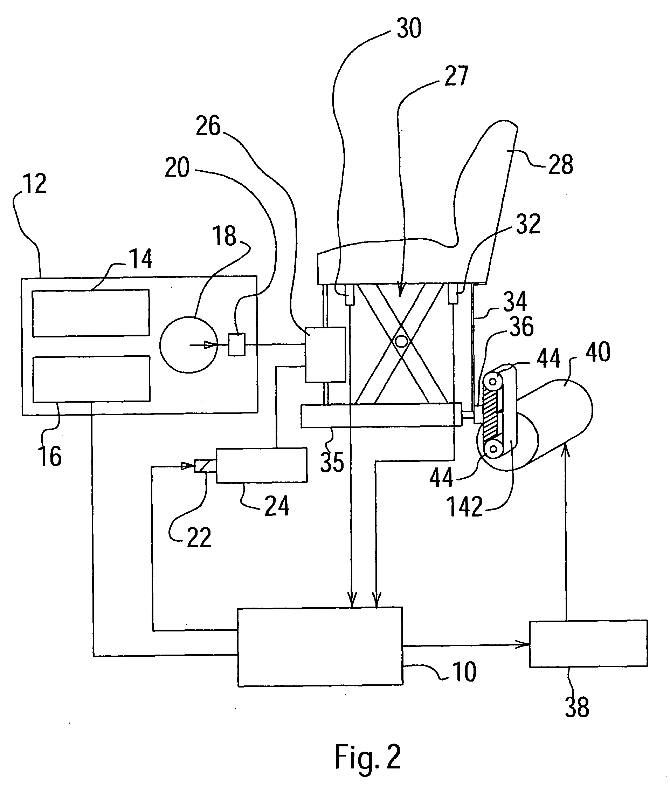

The suspension system of FIG. 2 is similar to the suspension system of FIG. 1, except the suspension system of FIG. 2 uses two cylindrical members, as opposed to a three cylindrical members. Accordingly, the tension member 142 of FIG. 2 is strung between two cylindrical members 44 and has a generally linear profile. The tension member 142 may comprise a chain, a belt, a belt with teeth, a belt with cogs, or the like. Like reference numbers in FIG. 1 and FIG. 2 indicate like elements.

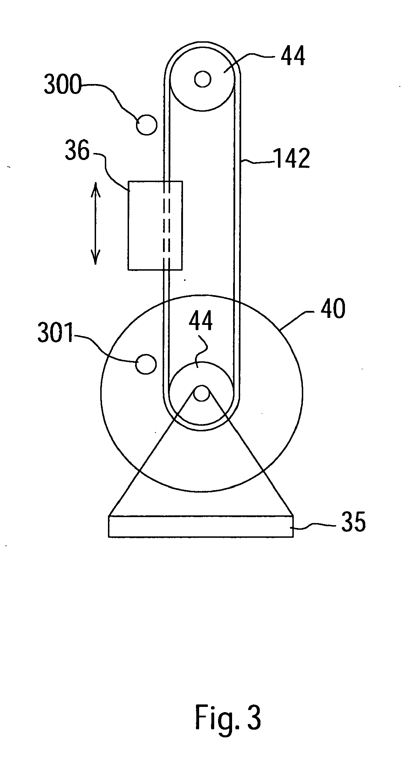

The cylindrical member configuration of FIG. 3 is generally consistent with that of FIG. 2. However, the configuration of FIG. 3 shows a lower limit sensor 301 and an upper limit sensor 300 to bound the vertical movement of the tension member 142. The sensors 300, 301 each may comprise a contact sensor, an optical sensor, a magneto restrictive sensor, a magnetic sensor or the like. If the sensors 300, 301 are contact sensors, such sensors may be arranged such that contact with retainer 36 (e.g., a top or bottom thereof) is detected. If the sensors are optical, the sensors may comprise a transmitter and a receiver, where the transmitter transmits a beam of electromagnetic radiation (e.g., infra-red, near-infrared ultra-violet, or other radiation) to the receiver such that interruption of the beam by the retainer 36 is detected.

The upper limit sensor 300 and the lower limit sensor 301 may be coupled to the controller 10 or the motor driver 38, for instance. Accordingly, if there is any slippage of the tension member 42 with respect to either cylindrical member 44, the rest position or home position of the tension member 42 may be reset or adjusted to compensate for any such slippage or misalignment. Further, the motor 40 may be disabled or prevented from going beyond the upper vertical limit associated with the upper limit sensor 300 or the lower vertical limit associated with the lower limit sensor 301.

Having described the preferred embodiment, it will become apparent that various modifications can be made without departing from the scope of the invention as defined in the accompanying claims.

## Claims

1. A suspension system for a seat of a vehicle, the suspension system comprising a base (35); a linkage (27); a seat (28) attached to the base (35) via the linkage (27); a pneumatic shock absorber (26) providing a respective resistance level against movement of the seat (28) with respect to the base (35) based on a corresponding pressure level of air or gas within the pneumatic shock absorber (26); a plurality of cylindrical members (44) spaced apart beneath the seat (28); a tension member (42, 142) arranged to engage the cylindrical members (44), the tension member (42, 142) operably coupled to the seat (28) via a bracket (34); an electric motor (40) for driving one of the cylindrical members (44); a first sensor (32) for detecting first sensor data associated with an instantaneous position of the seat (28) versus time; and a controller (10) for generating at least one of
- a first control signal for the electric motor (40) to change a height of the seat (28) in opposition to a change in the instantaneous position of the seat (28) providing active damping in response to vibrations transmitted from the vehicle traversing the ground, and
- a second control signal to change the pressure level of the air or gas within the pneumatic shock absorber (26) providing passive damping in response to the vibrations,
**characterized in that** the controller (10) adjusts both the amplitude of the position changes of the electric motor (40) as well as the pressure level of the air or gas within the pneumatic shock absorber (26) such **in that** a generally constant overall damping response is maintained during a time interval depending upon whether the vibration of the seat (28) is continuous, whether the vibration of the seat (28) is intermittent, and the rate of decay of vibrational energy.

2. The suspension system according to claim 1, **characterized in that** the controller (10) reduces active damping by decreasing the amplitude of position changes of the electric motor (40) as the passive damping is raised by increasing the pressure level of the air or gas within the pneumatic shock absorber (26) during the time interval.

3. The suspension system according to claim 1 or 2, **characterized in that** the controller (10) raises active damping by increasing the amplitude of position changes of the electric motor (40) as the passive damping is reduced by decreasing the pressure level of the air or gas within the pneumatic shock absorber (26) during the lead time interval.

4. The suspension system according to one of claims 1 to 3, **characterized by** a data processing module for determining the instantaneous position of the seat (28) from a respective instantaneous vertical acceleration.

5. The suspension system according to one of claims 1 to 4, **characterized in that** the tension member (42, 142) comprises a cog belt or a chain.

6. The suspension system according to one of claims 1 to 5, **characterized by** an upper travel limit sensor (300) for detecting an upper travel limit and a lower travel limit sensor (301) for detecting a lower travel limit of the seat (28).

7. The suspension system according to one of claims 1 to 6, **characterized by** a second sensor (30) comprising an accelerometer for determining a highest vertical position and a lowest vertical position of the seat (28) as those positions have substantially no vertical acceleration or a vertical acceleration approaching zero for the seat (28).

8. The suspension system according to one of claims 1 to 7, **characterized in that** the controller (10) determines a frequency of vibration based on the instantaneous position of the seat (28) versus time, wherein the first control signal is generally opposite in phase and substantially equal to the frequency of vibration.

9. The suspension system according to one of claims 1 to 8, **characterized in that** the first sensor (32) comprises a combination of a magnetic field sensor and a magnet spaced apart from the magnetic field sensor or a combination of a magneto resistive sensor and a magnet spaced apart from the magnetic field sensor to detect changes in movement or position of the seat (28).

10. The suspension system according to claims 1 to 9, **characterized in that** the controller (10) increases proportionally the pressure level of the air or gas within the pneumatic shock absorber (26) as a weight of an operator detected by the first sensor (32) increases with respect to a reference operator weight.

11. The suspension system according to claims 1 to 10, **characterized in that** the controller (10) decreases proportionally the pressure level of the air or gas within the pneumatic shock absorber (26) as a weight of an operator detected by the first sensor (32) decreases with respect to a reference operator weight.

## Patentansprüche

1. Aufhängungssystem für einen Sitz eines Fahrzeugs, wobei das Aufhängungssystem eine Basis (35); ein Gestänge (27); einen Sitz (28), der an der Basis (35) durch das Gestänge (27) angebracht ist; einen pneumatischen Stoßdämpfer (26), der ein entsprechendes Widerstandsniveau gegenüber einer Bewegung des Sitzes (28) in Bezug auf die Basis (35) basierend auf einem entsprechenden Luft- oder Gasdruckniveau in dem pneumatischen Stoßdämpfer (26) bereitstellt; mehrere Zylinderelemente (44), die unterhalb des Sitzes (28) beabstandet sind; ein Spannelement (42, 142), das angeordnet ist, um die Zylinderelemente (44) in Eingriff zu bringen, wobei das Spannelement (42, 142) mit dem Sitz (28) durch eine Klammer (34) betrieblich verbunden ist; einen Elektromotor (40) zum Antreiben eines der Zylinderelemente (44); einen ersten Sensor (32) zum Erkennen erster Sensordaten, die mit einer momentanen Position des Sitzes (28) gegenüber der Zeit assoziiert sind; und eine Steuerung (10) zum Erzeugen mindestens eines der Folgenden umfasst
- eines ersten Steuersignals für den Elektromotor (40), um eine Höhe des Sitzes (28) gegenüber einer Veränderung der momentanen Position des Sitzes (28) zu ändern, sodass eine aktive Dämpfung als Reaktion auf Schwingungen bereitgestellt wird, die von dem Fahrzeug übertragen werden, das über den Boden fährt, und
- eines zweiten Steuersignals, um das Druckniveau der Luft oder des Gases innerhalb des pneumatischen Stoßdämpfers (26) zu ändern, sodass eine passive Dämpfung als Reaktion auf die Schwingungen bereitgestellt wird,
**dadurch gekennzeichnet, dass** die Steuerung (10) sowohl die Amplitude der Positionsänderungen des Elektromotors (40) als auch das Druckniveau der Luft oder des Gases in dem pneumatischen Stoßdämpfer (26) derart einstellt, dass während eines Zeitintervalls in Abhängigkeit davon, ob die Schwingung des Sitzes (28) kontinuierlich ist, ob die Schwingung des Sitzes (28) intermittierend ist, und in Abhängigkeit von der Zerfallsrate der Schwingungsenergie eine im Allgemeinen konstante Dämpfungsgesamtreaktion beibehalten wird.

2. Aufhängungssystem nach Anspruch 1, **dadurch gekennzeichnet, dass** die Steuerung (10) die aktive Dämpfung durch Verringern der Amplitude der Positionsänderungen des Elektromotors (40) verringert, während die passive Dämpfung durch Erhöhen des Druckniveaus der Luft oder des Gases in dem pneumatischen Stoßdämpfer (26) während des Zeitintervalls erhöht wird.

3. Aufhängungssystem nach Anspruch 1 oder 2, **dadurch gekennzeichnet, dass** die Steuerung (10) die aktive Dämpfung durch Erhöhen der Amplitude der Positionsänderungen des Elektromotors (40) erhöht, während die passive Dämpfung durch Senken des Druckniveaus der Luft oder des Gases in dem pneumatischen Stoßdämpfer (26) während des Vorlaufzeitintervalls verringert wird.

4. Aufhängungssystem nach einem der Ansprüche 1 bis 3, **gekennzeichnet durch** ein Datenverarbeitungsmodul zum Ermitteln der momentanen Position des Sitzes (28) aus einer entsprechenden momentanen vertikalen Beschleunigung.

5. Aufhängungssystem nach einem der Ansprüche 1 bis 4, **dadurch gekennzeichnet, dass** das Spannelement (42, 142) einen Zahnriemen oder eine Kette umfasst.

6. Aufhängungssystem nach einem der Ansprüche 1 bis 5, **gekennzeichnet durch** einen Sensor für eine obere Weggrenze (300) zum Erkennen einer oberen Weggrenze und einen Sensor für eine untere Weggrenze (301) zum Erkennen einer unteren Weggrenze des Sitzes (28).

7. Aufhängungssystem nach einem der Ansprüche 1 bis 6, **gekennzeichnet durch** einen zweiten Sensor (30), der einen Beschleunigungsmesser zum Ermitteln einer höchsten vertikalen Position und einer niedrigsten vertikalen Position des Sitzes (28), während diese Positionen für den Sitz (28) im Wesentlichen keine vertikale Beschleunigung oder eine vertikale Beschleunigung haben, die sich null nähert, umfasst.

8. Aufhängungssystem nach einem der Ansprüche 1 bis 7, **dadurch gekennzeichnet, dass** die Steuerung (10) eine Schwingungsfrequenz basierend auf der momentanen Position des Sitzes (28) gegenüber der Zeit ermittelt, wobei das erste Steuersignal eine im Allgemeinen entgegengesetzte Phase aufweist und der Schwingungsfrequenz im Wesentlichen entspricht.

9. Aufhängungssystem nach einem der Ansprüche 1 bis 8, **dadurch gekennzeichnet, dass** der erste Sensor (32) eine Kombination eines Magnetfeldsensors und eines Magneten, der von dem Magnetfeldsensor beabstandet ist, oder eine Kombination eines magnetoresistiven Sensors und eines Magneten umfasst, der von dem Magnetfeldsensor beabstandet ist, um Veränderungen hinsichtlich der Bewegung oder Position des Sitzes (28) zu erkennen.

10. Aufhängungssystem nach den Ansprüchen 1 bis 9, **dadurch gekennzeichnet, dass** die Steuerung (10) das Druckniveau der Luft oder des Gases in dem pneumatischen Stoßdämpfer (26) proportional erhöht, während ein Gewicht eines Bedieners, das von dem ersten Sensor (32) erkannt wird, in Bezug auf ein Bedienerreferenzgewicht zunimmt.

11. Aufhängungssystem nach den Ansprüchen 1 bis 10, **dadurch gekennzeichnet, dass** die Steuerung (10) das Druckniveau der Luft oder des Gases in dem pneumatischen Stoßdämpfer (26) proportional verringert, während ein Gewicht eines Bedieners, das von dem ersten Sensor (32) erkannt wird, in Bezug auf ein Bedienerreferenzgewicht abnimmt.

## Revendications

1. Système de suspension pour un siège d'un véhicule, le système de suspension comprenant une base (35) ; un système de jonction (27) ; un siège (28) fixé à la base (35) via le système de jonction (27) ; un système d'absorption pneumatique des chocs (26) fournissant un niveau de résistance respectif à l'encontre du mouvement du siège (28) par rapport à la base (35) sur la base d'un niveau d'air ou de gaz comprimé correspondant régnant à l'intérieur du système d'absorption pneumatique des chocs (26) ; une pluralité d'éléments cylindriques (44) placés à une certaine distance les uns des autres sous le siège (28) ; un élément tendeur (42, 142) agencé pour engrener les éléments cylindriques (44), l'élément tendeur (42, 142) étant couplé en fonctionnement au siège (28) via une patte de fixation (34) ; un moteur électrique (40) permettant d'entraîner un des éléments cylindriques (44) ; un premier capteur (32) permettant de détecter les premières données de capteur associées à une position instantanée du siège (28) par rapport au temps ; et un dispositif de commande (10) permettant de générer au moins soit :
un premier signal de commande ordonnant au moteur électrique (40) de modifier une hauteur du siège (28) en opposition à une variation dans la position instantanée du siège (28) pour fournir un amortissement actif en réponse aux vibrations transmises par le véhicule traversant le sol ; et
un second signal de commande ordonnant de modifier le niveau de pression de l'air ou du gaz régnant à l'intérieur du système d'absorption pneumatique des chocs (26) pour fournir un amortissement passif en réponse aux vibrations ;
**caractérisé en ce que** le dispositif de commande (10) règle à la fois l'amplitude des changements de position du moteur électrique (40) ainsi que le niveau de pression de l'air ou du gaz régnant à l'intérieur du système d'absorption pneumatique des chocs (26) de façon à maintenir une réponse d'amortissement d'ensemble généralement constante pendant un intervalle de temps en fonction de si oui ou non la vibration du siège (28) est continue, de si oui ou non la vibration du siège (28) est intermittente et de la vitesse de détérioration de l'énergie vibratoire.

2. Système de suspension selon la revendication 1, **caractérisé en ce que** le dispositif de commande (10) réduit l'amortissement actif en diminuant l'amplitude des changements de position du moteur électrique (40) à mesure que l'amortissement passif augmente du fait de l'augmentation du niveau de pression de l'air ou du gaz régnant à l'intérieur du système d'absorption pneumatique des chocs (26) pendant l'intervalle de temps.

3. Système de suspension selon la revendication 1 ou 2, **caractérisé en ce que** le dispositif de commande (10) augmente l'amortissement actif en augmentant l'amplitude des changements de position du moteur électrique (40) à mesure que l'amortissement passif est réduit par diminution du niveau de pression de l'air ou du gaz régnant à l'intérieur du système d'absorption pneumatique des chocs (26) pendant l'intervalle de temps correspondant.

4. Système de suspension selon l'une quelconque des revendications 1 à 3, **caractérisé par** la présence d'un module de traitement de données permettant de déterminer la position instantanée du siège (28) à partir d'une accélération verticale instantanée respective.

5. Système de suspension selon l'une quelconque des revendications 1 à 4, **caractérisé en ce que** l'élément tendeur (42, 142) comprend une chaîne ou une courroie crantée.

6. Système de suspension selon l'une quelconque des revendications 1 à 5, **caractérisé par** la présence d'un capteur de limite de course supérieure (300) permettant de détecter une limite de course supérieure et d'un capteur de limite de course inférieure (301) permettant de détecter une limite de course inférieure du siège (28).

7. Système de suspension selon l'une quelconque des revendications 1 à 6, **caractérisé par** la présence d'un second capteur (30) comprenant un accéléromètre permettant de déterminer la plus haute position verticale et la plus basse position verticale du siège (28) étant donné que ces positions ne présentent sensiblement aucune accélération verticale ou une accélération verticale quasi nulle pour le siège (28).

8. Système de suspension selon l'une quelconque des revendications 1 à 7, **caractérisé en ce que** le dispositif de commande (10) détermine une fréquence de vibration sur la base de la position instantanée du siège (28) par rapport au temps, le premier signal de commande étant généralement opposé en phase et sensiblement égal à la fréquence de vibration.

9. Système de suspension selon l'une quelconque des revendications 1 à 8, **caractérisé en ce que** le premier capteur (32) comprend une combinaison d'un capteur de champ magnétique et d'un aimant placé à une certaine distance du capteur de champ magnétique ou une combinaison d'un capteur magnétorésistif et d'un aimant placé à une certaine distance du capteur de champ magnétique pour détecter les changements dans le mouvement ou la position du siège (28).

10. Système de suspension selon les revendications 1 à 9, **caractérisé en ce que** le dispositif de commande (10) augmente proportionnellement le niveau de pression de l'air ou du gaz régnant à l'intérieur du système d'absorption pneumatique des chocs (26) à mesure qu'un poids d'un conducteur détecté par le premier capteur (32) augmente par rapport au poids du conducteur de référence.

11. Système de suspension selon les revendications 1 à 10, **caractérisé en ce que** le dispositif de commande (10) diminue proportionnellement le niveau de pression de l'air ou du gaz régnant à l'intérieur du système d'absorption pneumatique des chocs (26) à mesure qu'un poids d'un conducteur détecté par le premier capteur (32) diminue par rapport au poids du conducteur de référence.
